# FASCICULE DE BREVET EUROPEEN

(11) **EP 3 411 823 B1**
(45) Date de publication et mention de la délivrance du brevet: **15.12.2021**
(21) Numéro de dépôt: 17701547.6
(22) Date de dépôt: 27.01.2017
(51) Int. Cl.: G06Q 20/38, G06Q 20/20, G06F 21/60, G06F 21/44, G06Q 20/32, G06F 21/64

(54) **PROCEDE D'ETABLISSEMENT DE COMMUNICATION SECURISE ENTRE UN TERMINAL DE PAIMENT ET UN DISPOSITIF D'ENCAISSEMENT**
VERFAHREN ZUR HERSTELLUNG EINER SICHEREN KOMMUNIKATION ZWISCHEN EINEM ZAHLUNGSENDGERÄT UND EINER ABRECHNUNGSVORRICHTUNG
METHOD FOR ESTABLISHING SECURE COMMUNICATION BETWEEN A PAYMENT TERMINAL AND AN ENCASHMENT DEVICE

(30) Priorité: 02.02.2016 FR 1650827
(43) Date de publication de la demande: 12.12.2018
(73) Titulaire: Ingenico Group, 75015 Paris (FR)
(72) Inventeur: QUENTIN, Pierre, 95880 Enghien Les Bains (FR); MARCON, Jérôme, Paris (FR)
(74) Mandataire: Vidon Brevets & Stratégie
(86) Numéro de dépôt international: PCT/EP2017/051864
(87) Numéro de publication internationale: WO 2017/133988

(56) Documents cités:
- WO-A2-2008/131133
- US-A1- 2007 116 292
- P Fivel: "IPP3xx Security Target Lite", , 26 novembre 2010 (2010-11-26), XP055304977, Extrait de l'Internet: URL:https://www.bsi.bund.de/SharedDocs/Dow nloads/DE/BSI/Zertifizierung/Reporte/Repor te08/0859b_pdf.pdf?__blob=publicationFile& v=2 [extrait le 2016-09-22]

## Description

### 1. Domaine

L'invention se rapporte au domaine de la transmission de données, de manière sécurisée, entre deux dispositifs. Plus particulièrement, la présente technique se rapporte au domaine de la transmission de données, de manière sécurisée, entre un dispositif maitre et un dispositif esclave, lors d'un processus d'appairage du dispositif maitre avec le dispositif esclave. Selon un aspect particulier, la présente technique s'applique à l'appairage d'un périphérique, comme un terminal de paiement (en tant que dispositif esclave, également appelé périphérique) avec un dispositif d'encaissement, comme une caisse enregistreuse (en tant que dispositif maitre).

### 2. Art Antérieur

Le dispositif d'encaissement (comme par exemple la caisse enregistreuse) et le terminal de paiement sont deux outils essentiels du commerçant, quelle que soit son activité. Il s'agit de deux dispositifs, qui, en règle générale, sont connectés entre eux afin de former un ensemble permettant au commerçant de d'accepter de nombreux moyens de paiement. Les avantages du terminal de paiement sont nombreux : c'est un dispositif souvent sécurisé, qui accepte de nombreux moyens de paiement (carte à puce, carte à bande magnétique, carte sans contact, carte prépayées, portefeuilles installés sur des terminaux mobiles de type smartphones) et qui est bien connu de la clientèle.

Le dispositif d'encaissement, quant à lui, permet au commerçant de journaliser son activité et de centraliser les ventes, quel que soit le moyen de paiement utilisé (carte, chèque, argent liquide). Le dispositif d'encaissement dispose par ailleurs fréquemment d'un lecteur de code barre qui permet de scanner les produits, de reconnaitre ceux-ci, d'en afficher le prix et d'établir le ticket de caisse. La caisse enregistreuse a également tiré parti de la numérisation de l'économie et peut être reliée à un serveur, par l'intermédiaire d'un réseau de communication, afin de transmettre et de recevoir des informations en provenance de logiciels de gestion de stocks, de logiciels de comptabilités, etc.

Dans de nombreux commerces, le dispositif d'encaissement est une caisse enregistreuse. Dans de nombreux commerces également, le dispositif d'encaissement et le terminal de paiement sont connectés l'un avec l'autre. Cette connexion participe à l'efficacité de processus de vente. Par exemple, à la fin de l'établissement de la liste des articles à acheter, le commerçant valide le montant de la transaction. Ce montant est automatiquement transmis au terminal de paiement (dispositif esclave) qui effectue alors l'opération de paiement de manière indépendante (c'est-à-dire que l'opération de paiement en tant que telle n'est pas sous le contrôle de la caisse enregistreuse). Ainsi, l'utilisateur présente son moyen de paiement au terminal de paiement, qui requiert éventuellement la saisie de données supplémentaires (comme un code PIN par exemple). Lorsque la transaction est validée, le terminal de paiement transmet, à la caisse enregistreuse, une donnée relative à la fin de la transaction. Il existe donc un lien relativement important d'un point de vue sécuritaire, qui est établit entre la caisse enregistreuse et le terminal de paiement. En effet, on comprend que si le terminal de paiement est remplacé ou modifié, sans que le commerçant ne s'en aperçoive, il est possible de modifier ou de falsifier le contenu des données qui transitent entre le terminal de paiement et la caisse enregistreuse au détriment du commerçant, par exemple en créditant un autre compte que celui du commerçant ou en obtenant des données confidentielles sur les cartes de paiement utilisées dans le terminal de paiement.

C'est pour cette raison qu'il existe un processus d'établissement de lien sécurisé entre le terminal de paiement et la caisse enregistreuse. Il s'agit d'un appairage qui permet à la caisse enregistreuse de s'assurer, théoriquement, que le terminal de paiement avec lequel elle communique n'est pas un terminal frauduleux. L'établissement d'un lien sécurisé entre le périphérique (par exemple le terminal de paiement) et la caisse enregistreuse comprend la création d'un seul et unique canal de communication sécurisé entre le périphérique et un composant spécifique de sécurisation, en transitant via le dispositif d'encaissement (i.e. via le système d'exploitation non sécurisé). L'établissement d'un lien sécurisé entre le périphérique (par exemple le terminal de paiement) et la caisse enregistreuse comprend également la transmission, à la caisse enregistreuse, par le périphérique, d'un message d'acquittement. Ce message transmis à l'initiative du périphérique, à la fin de l'établissement du lien sécurisé.

Le problème réside d'une part dans le fait que ce processus est mis en œuvre via le système d'exploitation non sécurisé de la caisse enregistreuse et d'autre part que la finalisation de l'appairage est à l'initiative du terminal (du périphérique).

En conséquence, un fraudeur qui a réussi à espionner les échanges de données entre un périphérique et le dispositif d'encaissement peut remplacer ce périphérique par un périphérique frauduleux configuré pour rejouer ces mêmes échanges de données, et ainsi obtenir des données confidentielles et/ou exécuter des actions non autorisées. Le document US 2007/116292 A1 (KURITA TARO [JP] ET AL) 24 mai 2007 (2007-05-24) décrit un contrôleur NFC (ou bluetooth), utilisé comme un relais (déchiffrant et rechiffrant des données) entre le téléphone dans lequel il est situé et un téléphone distant pour effectuer des paiements.

Le document P Fivel: "IPP3xx Security Target Lite", 26 novembre 2010 (2010-11-26), extrait du site de certification du BSI décrit une cible de sécurité, utilisé pour les certifications de sécurité common criteria qui divulgue un système de paiement (Point of Interaction), ainsi que les exigences de sécurité qu'il doit respecter: la protections des interfaces avec les composants externes comme les caisses enregistreuses et leurs authentification, par exemple utilisant un identifiant unique.

Le document WO 2008/131133 A2 (HYPERCOM CORP [US]; WALTERS PAUL [US]; ANDERSSON ULF [SE]) 30 octobre 2008 (2008-10-30) décrit le chiffrement utilisé entre les différents composants d'un terminal de paiement, en particulier, l'écran, le clavier ou d'autres des périphériques et l'unité centrale de point de paiement en extérieurs, par exemple de distributeur de carburants. L'authentification de ces périphériques est basée sur la vérification de certificats cryptographiques et l'envoi de clefs de chiffrages, elle même protégées en utilisant des algorithmes asymétriques.

### 3. Résumé

La technique proposée ne présente pas au moins certains des inconvénients précédemment mentionné. La présente technique permet en effet de mettre en œuvre un appairage entre périphérique et dispositif d'encaissement qui soit réellement sécurisé. Plus particulièrement, la présente technique se rapporte à un Procédé de transmission de données, procédé mis en œuvre au sein d'un environnement d'exécution sécurisé d'un dispositif électronique, dit composant de confiance, ledit composant de confiance étant couplé à un dispositif d'encaissement, ledit procédé de transmission de données comprenant les étapes décrites dans la revendication indépendante 1.

Ainsi, le composant de confiance est à même de vérifier la validité de la requête qui lui est transmise : il peut le cas échéant détecter une tentative de connexion frauduleuse de la part du dispositif d'encaissement.

Ladite étape d'établissement dudit deuxième canal de communication sécurisé comprend :
- une étape d'obtention d'un identifiant dudit périphérique ;
- une étape de recherche, au sein d'une structure de données d'autorisation, d'une donnée correspondant audit identifiant dudit périphérique ;
et lorsque ladite recherche délivre un résultat positif :
- une étape d'appairage dudit périphérique avec ledit composant de confiance, mettant en œuvre un protocole d'appairage prédéterminé.

Ainsi, le composant de confiance est à même de vérifier la validité de la requête qui lui est transmise : il peut le cas échéant détecter une tentative de connexion frauduleuse de la part du périphérique.

Selon un mode de réalisation particulier, postérieurement à l'étape d'établissement dudit deuxième canal de communication sécurisé, ledit procédé comprend :
- une étape de réception, en provenance dudit périphérique, d'un message de confirmation d'appairage, ledit message comprenant au moins une première donnée chiffrée ;
- une étape de déchiffrement dudit message d'appairage, délivrant au moins une donnée de confirmation d'appairage ;
- une étape de chiffrement de ladite au moins une donnée d'appairage, délivrant au moins une deuxième donnée chiffrée ;
- une étape de transmission de ladite au moins une deuxième donnée chiffrée à destination dudit dispositif d'encaissement.

Selon une caractéristique particulière, ladite étape de réception, en provenance dudit périphérique, d'un message de confirmation d'appairage comprend une étape de réception de ladite au moins une première donnée chiffrée en provenance dudit dispositif d'encaissement, lequel joue le rôle de relai entre ledit périphérique et ledit composant de confiance.

Selon un autre aspect, l'invention se rapporte à un dispositif électronique de transmission de données, disposant d'un environnement d'exécution sécurisé, dit composant de confiance, ledit composant de confiance étant couplé à un dispositif d'encaissement, ledit composant de confiance comprenant les moyens décrits dans la revendication indépendante 6.

Selon un autre aspect, la présente se rapporte également à un système de paiement tel que décrit dans la revendication indépendante 7

Selon une implémentation préférée, les différentes étapes des procédés selon l'invention sont mises en œuvre par un ou plusieurs logiciels ou programmes d'ordinateur, comprenant des instructions logicielles destinées à être exécutées par un processeur de données d'un dispositif selon l'invention et étant conçu pour commander l'exécution des différentes étapes des procédés.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de l'invention.

### 4. Dessins

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente la manière dont l'échange de données est effectué, entre un terminal de paiement et une caisse enregistreuse avec la technique de l'art antérieur ;
- la figure 2 est une courte illustration de la technique proposée ;
- la figure 3 décrit un mode de réalisation d'une technique de transmission de données, dans un système de paiement ;
- la figure 4 décrit sommairement l'architecture d'un composant de confiance ;
- la figure 5 décrit sommairement l'architecture d'un périphérique, tel qu'un terminal de paiement ;
- la figure 6 décrit sommairement l'architecture d'un dispositif d'encaissement, tel qu'une caisse enregistreuse.

### 5. Description

### 5.1. Rappel du principe

Comme exposé précédemment, le principe général de la technique proposée consiste à mettre en œuvre un relai sécurisé entre le périphérique et le dispositif d'encaissement.

Pour ce qui précède et ce qui suit, on considère que :
- le dispositif d'encaissement est un dispositif qui comprend des moyens pour l'exécution d'un système d'exploitation (par exemple Linux^{™}, Windows^{™}) et qu'une application d'encaissement est exécutée par ce système d'exploitation pour effectuer les tâches de prise de commande et d'encaissement ;
- le composant de confiance est un dispositif sécuritaire ; il peut être soit directement intégrée sur une carte mère du dispositif d'encaissement (et dans ce cas faire partie de ce dispositif) ou être lié au dispositif d'encaissement (par exemple enfiché dans une prise USB ou dans un autre d'interface du dispositif d'encaissement) ; le composant de confiance met en œuvre une application de confiance, cette application prenant la forme d'un processus exécuté par le composant de confiance ;
- le périphérique est un dispositif qui participe au fonctionnement de l'application d'encaissement (souris, clavier, scanner de code barre, terminale de paiement) et qui est connecté (ou connectable) au dispositif d'encaissement par l'intermédiaire de l'application d'encaissement ;

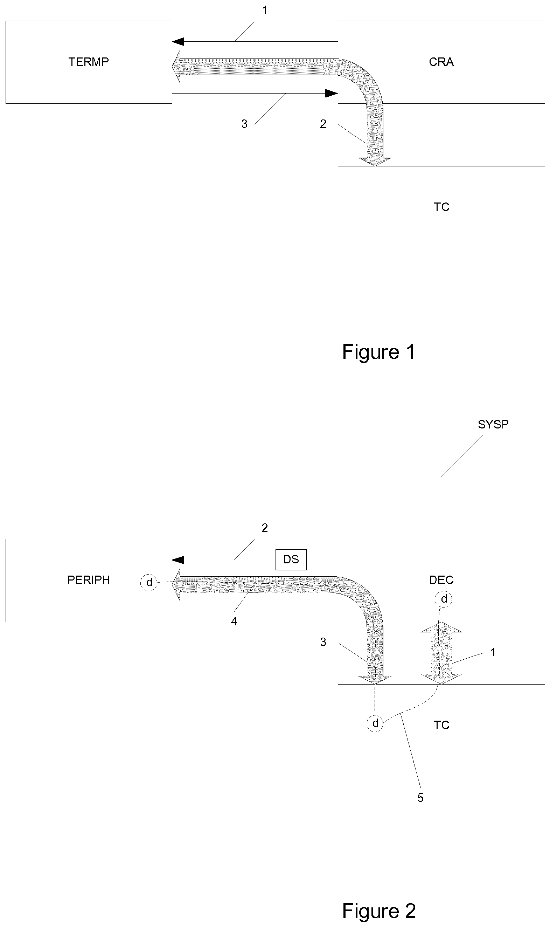

Dans la technique de l'art antérieur, la caisse enregistreuse (ou l'application d'encaissement) joue le rôle de relai (de proxy) entre le terminal de paiement et le composant (ou l'application) de confiance. Le procédé de transmission de données de l'art antérieur se contente de réaliser une transmission de données sécurisée entre le composant de confiance et le terminal de paiement. La figure 1 explicite le fonctionnement du procédé de transmission de données de l'art antérieur. Le système de paiement comprend une caisse enregistreuse (CRA), un composant de confiance (TC) et un terminal de paiement (TERM). Lorsqu'elle souhaite utiliser le terminal de paiement (TERMP), la caisse enregistreuse (CRA) transmet (1) une requête en ce sens au terminal de paiement (TERMP). Le composant de confiance (TC) établit (2) un canal de communication sécurisé entre lui-même et le terminal de paiement (TERMP). A l'issue de cet établissement, le terminal de paiement (TERMP) confirme lui-même (3) à la caisse enregistreuse l'établissement du canal de communication sécurisé.

Par la suite, lorsque le périphérique souhaite transmettre une donnée au dispositif d'encaissement, il effectue une transmission de cette donnée au composant de confiance. Le composant de confiance réceptionne cette donnée, la chiffre et la retransmet au périphérique. Le périphérique transmet alors cette donnée chiffrée (reçue du composant de confiance) au dispositif d'encaissement. Ces échanges entre le composant de confiance et le périphérique transitent par l'intermédiaire du dispositif d'encaissement, car c'est au sein de l'environnement d'exécution non sécurisé (dans lequel fonctionne l'application d'encaissement) que les interfaces de communication (par exemple réseau, USB, WiFi, Bluetooth) sont disponibles et utilisables. Le composant de confiance ne dispose pas d'un accès direct à ces interfaces de communication et ne peut donc pas interagir directement avec le périphérique. Ainsi, de manière relativement contreproductive, le dispositif d'encaissement « relaie », mais de façon imparfaite, les données transmises entre le périphérique et le composant de confiance.

Ainsi, dans la technique antérieure, si le périphérique est frauduleux, le canal sécurisé ne sera pas établit entre le composant de confiance et le périphérique, mais le dispositif d'encaissement (et l'application d'encaissement) n'a pas de possibilité de la savoir car c'est le périphérique qui en dernier lieu indique à l'application d'encaissement qu'il est correctement connecté. Il suffit donc à l'attaquant de « rejouer » des données précédemment « captées » pour faire illusion et faire croire à l'application d'encaissement que tout s'est passé correctement.

Le principe du relai proposé dans la présente technique est différent de la technique antérieure : il consiste à établir un premier canal de communication sécurisé entre le composant de confiance et le dispositif d'encaissement puis à établir un deuxième canal sécurisé entre le composant de confiance et le périphérique (par exemple le périphérique).

Ce principe est décrit en relation avec la figure 2. En premier lieu, le dispositif d'encaissement (DEC) s'apparie avec le composant de confiance (TC) afin de créer un premier canal de communication sécurisé (1). Dans un deuxième temps, après la création du premier canal de communication sécurisé (1), le dispositif d'encaissement transmet, au périphérique (PERIPH), une requête (2) d'appairage. Cette requête (2), comme cela est explicité par la suite, contient une donnée (DS) connue du dispositif d'encaissement. En utilisant notamment cette donnée, le périphérique s'apparie avec le composant de confiance (TC) afin de créer un deuxième canal de communication sécurisé (3). La confirmation de l'établissement du canal sécurisée n'est plus transmise directement par le périphérique au dispositif d'encaissement. Au lieu de cela, cette confirmation est transmise au composant de confiance, qui relai cette confirmation au dispositif d'encaissement.

Par la suite, toute donnée (d) en provenance du périphérique (PERIPH) et à destination du dispositif d'encaissement (DEC) est transmise (4) au composant de confiance (TC) dans ce deuxième canal de communication sécurisé (3). Le composant de confiance extrait la donnée reçue et retransmet (5) celle-ci en utilisant le premier canal de communication sécurisé (1) au dispositif d'encaissement (DEC).

De cette manière, il devient difficile d'opérer directement une transmission de données entre le périphérique et le dispositif d'encaissement. La transmission d'une donnée est nécessairement routée vers le composant de confiance.

Le relai peut être qualifié de « double étage », dans un certain sens, car :
- la création du premier canal de communication sécurisé entre le dispositif d'encaissement et le composant de confiance permet d'échanger directement des données : l'application d'encaissement qui est exécutée au sein du système d'exploitation du dispositif d'encaissement peut alors échanger des données, de manière sécurisée, directement avec le processus qui est exécuté par le composant de confiance ;
- la création du deuxième canal de communication sécurisé entre le périphérique et le composant de de confiance permet au composant de confiance de réceptionner les données en provenance du périphérique ; elle évite cependant à l'application de confiance de retransmettre ces données au périphérique (comme dans l'art antérieur) puisque le premier canal de communication sécurisé peut être utilisé directement pour cette fonction de transmission à destination du dispositif d'encaissement.

Ainsi, on comprend que le composant de confiance joue le rôle de relai sécurisé entre le périphérique et le dispositif d'encaissement ; il s'agit en quelque sorte du premier étage du relai. Le deuxième étage est constitué par la fonction de routage mise en œuvre au sein du dispositif d'encaissement : en effet, le composant de confiance ne peut pas recevoir directement les données en provenance du périphérique car il ne dispose pas de ses propres interfaces de communication avec l'extérieur. Dès lors, les données qui proviennent du périphérique et qui lui sont destinées sont routées par le dispositif d'encaissement.

La sécurité est augmentée car le périphérique n'est plus en mesure de transmettre directement des données au dispositif d'encaissement : il doit pour cela nécessairement passer par le composant de confiance et ne peut donc pas réutiliser des données précédemment échangées avec le dispositif d'encaissement.

### 5.2. Description d'un mode de réalisation

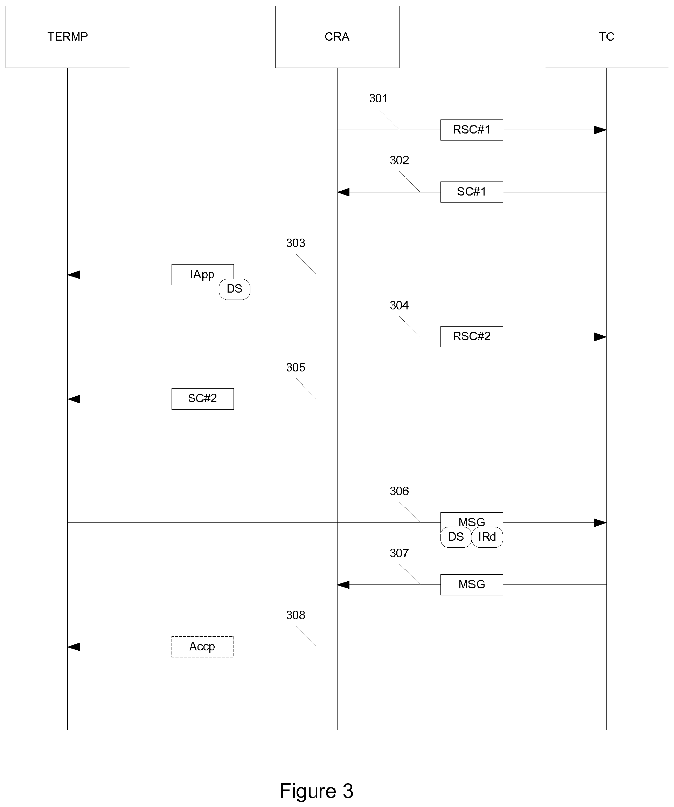

On décrit, dans ce mode de réalisation, une mise en œuvre de la présente technique appliquée à un système de paiement. Ce mode de réalisation est décrit en relation avec la figure 3. Un système de paiement (SYSP) selon la présente comprend une caisse enregistreuse (CRA) en tant que dispositif d'encaissement, un terminal de paiement (TERMP) et un au moins un composant mettant à disposition un environnement d'exécution sécurisé (composant de confiance). Dans cette mise en œuvre, le terminal de paiement (TERMP) est considéré comme étant un périphérique, la caisse enregistreuse (CRA) implémente une application d'encaissement. La caisse enregistreuse (CRA), dans ce mode de réalisation, est un dispositif électronique, construite d'une manière sensiblement identique à un ordinateur. Elle comprend un processeur, une mémoire vive, une mémoire tampon, un ensemble d'interfaces de communication (USB, Bluetooth, WiFi, Ethernet) et une mémoire de masse. L'ensemble de ces composants est monté sur une carte mère. La caisse enregistreuse (CRA) comprend également un écran et au moins un dispositif de saisie (écran tactile, clavier). La caisse enregistreuse (CRA) comprend également, de manière optionnelle, un lecteur de code barre (unidimensionnel ou bidimensionnel par exemple). L'ensemble des dispositifs connecté à la caisse enregistreuse (CRA) (dispositif de saisie, interface, etc.) peuvent, en fonction des modes de réalisation, être considérés comme des périphériques. Dans le cas présent cependant, seul le cas d'un terminal de paiement (TERMP) en tant que dispositif périphérique est décrit.

La caisse enregistreuse (CRA) embarque également au moins un composant mettant à disposition un environnement d'exécution sécurisé. Dans le mode de réalisation présenté ici, ce composant est directement intégré au sein de la carte mère de la caisse enregistreuse (CRA) et est appelé composant de confiance (TC). Dans d'autres modes de réalisation, un dongle ou une clé USB pourrait également être considéré comme un environnement d'exécution sécurisé et être connecté à la caisse enregistreuse (CRA) (connecté par exemple au sein d'un connecteur interne, sur la carte mère, sur un connecteur dédié). D'un point de vue sécurité physique, il est préférable que l'environnement d'exécution sécurisé ne soit pas accessible de l'extérieur afin d'éviter une fraude qui consisterait à remplacer celui-ci.

Dans ce mode de réalisation, le terminal de paiement (TERMP) se connecte à la caisse enregistreuse (CRA) par l'intermédiaire de l'interface bluetooth de celle-ci. Cette interface présente l'avantage d'une part d'être sans fil et d'autre part d'être de courte portée ce qui garantit que des mécanismes de sécurisation tiers peuvent être mis en œuvre en cas d'éloignement prolongé du terminal de paiement (TERMP). Le canal de communication sécurisé entre le terminal de paiement (TERMP) et le composant de confiance (TC) est donc établi au travers de l'interface bluetooth.

Le procédé de transmission de données mis en œuvre est le même que celui décrit précédemment.

En particulier, au démarrage de la caisse enregistreuse (CRA), celle-ci transmet (301), au composant de confiance (TC), une requête (RSC#1) d'établissement du premier canal de communication sécurisé (SC#1). Le composant de confiance (TC), sur la base de la requête de reçue (RSC#1) établit (302) le canal de transmission sécurisé. Pour ce faire, le composant de confiance (TC) extrait, de la requête reçue (RSC#1), un identifiant et recherche dans une liste, dite liste blanche, la présence de cet identifiant. S'il parvient à identifier l'identifiant dans la liste blanche, le canal de communication sécurisé est établi.

Dans une variante de ce mode de réalisation, l'identifiant de la caisse enregistreuse (CRA) est contenu dans une donnée chiffrée avec une clé privée de la caisse enregistreuse (CRA). Cette donnée chiffrée est déchiffrée (à l'aide de la clé publique de la caisse enregistreuse (CRA)) par le composant de confiance (TC) et délivre une donnée en clair (l'identifiant en tant que tel). Le composant de confiance (TC) effectue alors la recherche de cette donnée en clair dans la liste blanche.

Dans une autre variante de ce mode de réalisation, l'identifiant de la caisse enregistreuse (CRA) est contenu dans une donnée chiffrée avec une clé publique du composant de confiance (TC). Cette donnée chiffrée est déchiffrée (à l'aide de la clé privée du composant de confiance (TC)) par le composant de confiance (TC) et délivre une donnée en clair. Le composant de confiance (TC) effectue alors la recherche de cette donnée en clair dans la liste blanche.

Dans une autre variante de ce mode de réalisation, l'identifiant de la caisse enregistreuse (CRA) est contenu dans une donnée chiffrée avec une clé de session, partagée entre le composant de confiance (TC) et la caisse enregistreuse (CRA). Cette donnée chiffrée est déchiffrée (à l'aide de la clé privée de session) par le composant de confiance (TC) et délivre une donnée en clair. Le composant de confiance (TC) effectue alors la recherche de cette donnée en clair dans la liste blanche. La clé de session est renouvelée périodiquement, par exemple soit à chaque démarrage de la caisse enregistreuse (CRA), soit à intervalle régulier.

Une fois que le premier canal sécurisé est établi, une communication de données (par exemple des paquets de données issus d'un protocole de communication prédéterminé) peut être établie du composant de confiance (TC) vers la caisse enregistreuse (CRA) (et vice versa).

Il s'en suit une deuxième étape, comprenant la création du deuxième canal sécurisé, entre le terminal de paiement (TERMP) et le composant de confiance (TC). Cette deuxième étape est initiée par la transmission (303), par la caisse enregistreuse (CRA), au terminal de paiement (TERMP), d'une instruction d'appairage (IApp). Cette instruction d'appairage est, selon la présente technique accompagnée d'une donnée d'initialisation de session (DS) (par exemple une valeur de compteur), déterminée par la caisse enregistreuse (CRA). Cette donnée d'initialisation de session (DS) n'est connue que de la caisse enregistreuse (CRA). A la réception de cette instruction d'appairage, le terminal de paiement (TERMP) initie le processus d'appairage et établi, avec le composant de confiance (TC), le deuxième canal de communication sécurisé. Le terminal de paiement (TERMP) transmet (304) au composant de confiance (TC) une requête (RSC#2) d'établissement du deuxième canal de communication sécurisé (SC#2).

Le composant de confiance (TC), sur la base de la requête reçue (RSC#2) par le terminal de paiement (TERMP), établit le canal de transmission sécurisé : le composant de confiance (TC) extrait, de la requête reçue (RSC#2), un identifiant et recherche dans une liste, dite liste blanche, la présence de cet identifiant. S'il parvient à identifier l'identifiant dans la liste blanche, le canal de communication sécurisé est établi (305). Les variantes de transmission des identifiants pour l'établissement de ce deuxième canal de communication sont les mêmes que celle présentées précédemment pour le premier canal de communication.

Une fois que l'appairage est réalisé (et donc une fois que la communication sécurisée est établit avec le composant de confiance (TC)), le terminal de paiement (TERMP) se maintient dans un état dit de blocage (c'est-à-dire qu'il n'est pas en mesure de réaliser une transaction de paiement). Durant ce maintien en état de blocage, le terminal de paiement (TERMP) construit un message (MSG) à destination de la caisse enregistreuse (CRA). Ce message comprend la donnée d'initialisation de session (DS) (par exemple un compteur d'initialisation de session ou un compteur séquentiel de message) précédemment reçue de la part de la caisse enregistreuse (CRA) ainsi qu'un nombre aléatoire. On précise que la donnée d'initialisation de session (par exemple le compteur) doit être modifiée (incrémenté) dans chaque nouveau message généré par le périphérique vers la caisse, afin d'éviter un une attaque par rejeu en cours de session.

Le terminal de paiement (TERMP) transmet (306) ce message au composant de confiance (TC) ; le message (MSG) comprend une instruction de redirection (IRd) à la caisse enregistreuse (CRA); puis le terminal de paiement (TERMP) passe dans un état dit « transaction-ready » (de l'anglais pour « prêt à la transaction »).

A réception de ce message (MSG), le composant de confiance (TC) effectue le traitement de celui-ci puis il le retransmet (307) sur le premier canal de transmission sécurisé (SC#1). La caisse enregistreuse (CRA) réceptionne (et/ou intercepte) ce message, et le déchiffre.

La caisse enregistreuse (CRA) possède dès lors l'information selon laquelle le terminal de paiement est correctement connecté (et identifié) au sein du système de paiement (SYSP). De manière complémentaire et optionnelle, le procédé comprend une étape de transmission (308), par la caisse enregistreuse (CRA) au terminal de paiement (TERMP) d'un message d'acceptation (Accp). Ce message peut avantageusement comprendre le « nonce » (nombre aléatoire), précédemment transmis par le terminal de paiement à l'initialisation de la connexion.

Dans un mode de réalisation particulier de la présente technique, l'étape de transmission (306) du message (MSG) à destination du composant de confiance (TC) comprend :
- une étape de création d'un premier message (MSG1) de confirmation d'appairage à destination du dispositif d'encaissement :
   o ce premier message (MSG1) comprend : un identifiant de message (MsgID) et des données chiffrées (PayIENc) ;
   o les données chiffrées (PayENc) sont le résultat du chiffrement, par le terminal de paiement, des données qui sont en dernier lieu destinées au dispositif d'encaissement, et qui sont des données de confirmation d'appairage ;
   o ainsi, les données qui sont chiffrées sont : un identifiant de message (MsgID2), un compteur, la donnée d'initialisation de session (DS) et d'autres données de protocole ; le deuxième identifiant de message (MsgID2) peut être identique au premier identifiant de message (MsgID) : ainsi on lie de manière forte la commande du périphérique et la réponse du dispositif d'encaissement ;
- une étape de transmission du premier message (MSG1) à destination du dispositif d'encaissement, ce premier message étant transmis au dispositif d'encaissement en utilisant le moyen de communication qui permet la transmission de données entre le terminal et le dispositif d'encaissement (c'est-à-dire dans notre cas, le bluetooth) ;
- à réception de ce premier message par le dispositif d'encaissement, une étape d'extraction des données chiffrées (PayENc) ;
- une étape de transmission de ces données chiffrées, sous la forme d'un deuxième message (MSG2) au composant de confiance ; on note que comme les données sont chiffrées par le terminal de paiement pour être transmises au composant de confiance, le dispositif d'encaissement ne joue, dans cette étape, qu'un rôle de relai : le dispositif d'encaissement ne peut pas prendre connaissance de données chiffrées puisqu'il s'agit de données chiffrées par le terminal de paiement et destinées au composant de confiance ;
- à réception de ce deuxième message (MSG2), le composant de confiance déchiffre les données chiffrées (PayENC) et obtient transitoirement des données en clair, qu'il rechiffre (PayENC2) en utilisant les matériels cryptographiques nécessaires ;

L'étape de transmission 307 est alors mise en œuvre pour retransmettre les données chiffrées au dispositif d'encaissement. L'établissement d'un canal de communication sécurisé est réalisé de la manière suivante (l'exemple pris est entre un périphérique et les composant de confiance). Préalablement à l'établissement, le composant de confiance est provisionné avec une liste blanche contenant un tuple {Peripheralldentifier, PeripheralPublicKey} pour chaque périphérique autorisé. « PeripheralIdentifier » est l'identifiant du périphérique et « PeripheralPublicKey » correspondt à la clé publique du périphérique. Puis, l'établissement du canal en tant que tel comprend les étapes suivantes :
- le périphérique génère un nonce (nombre aléatoire) et transmet une requête d'appairage *pairing request =* { *PeripheralIdentifier, PeripheralNonce} ;*
- le composant de confiance recherche dans la liste blanche la *« PeripheralPublicKey »* liée au « *PeripheralIdentifier »* reçu
- l'applet génère un nonce (nombre aléatoire) et transmet une réponse d'appairage *pairing response = PeripheralPublicKey.ENC(PeripheralNonce* // *AppletlNonce) ;*
- le périphérique déchiffre cette réponse « pairing response » avec sa clé privée « PeripheralPrivateKey »
- Le périphérique et l'applet génèrent chacun de leur côté la clé du Secure Channel via la formule SHA-256(SHA-256(PeripheralNonce | | AppletlNonce))

### 5.3. Autres caractéristiques et avantages

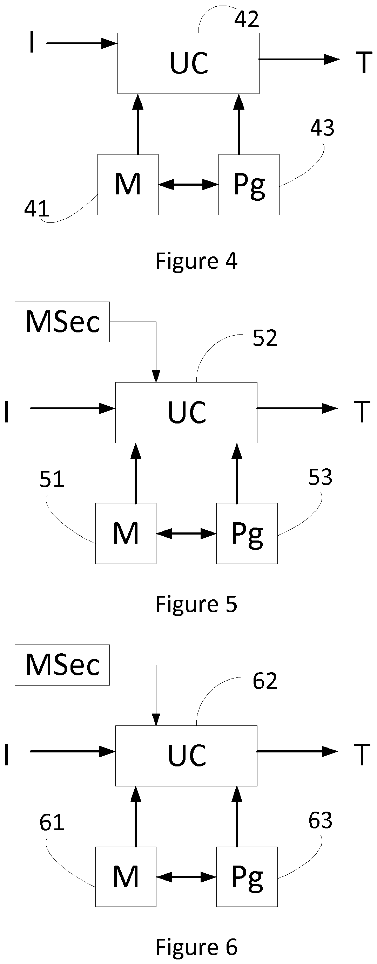

On décrit, en relation avec la figure 4, un périphérique mis en œuvre pour transmettre des données dans un canal de communication sécurisé, selon le procédé décrit préalablement.

Par exemple, le périphérique comprend une mémoire 41 constituée d'une mémoire tampon, une unité de traitement 42, équipée par exemple d'un microprocesseur, et pilotée par le programme d'ordinateur 43, mettant en œuvre un procédé de transmission de données dans un canal de communication sécurisé. À l'initialisation, les instructions de code du programme d'ordinateur 43 sont par exemple chargées dans une mémoire avant d'être exécutées par le processeur de l'unité de traitement 42. L'unité de traitement 42 reçoit en entrée une instruction d'appairage de la part d'un dispositif d'encaissement. Le microprocesseur de l'unité de traitement 42 met en œuvre les étapes du procédé de transmission, selon les instructions du programme d'ordinateur 43 pour établir un canal de communication sécurisé avec un composant de confiance (qui est couplé avec le dispositif d'encaissement), le canal étant établi au travers du dispositif d'encaissement (jouant le rôle de relai - de proxy -) ; une fois ce canal de communication sécurisé établi, le périphérique construit un message (dont le contenu est chiffré) à destination du dispositif d'encaissement, ledit message étant relayé par le composant de confiance.

Pour cela, le périphérique comprend, outre la mémoire tampon 41, des moyens de communications, tels que des modules de communication réseau, des moyens de transmission de données et éventuellement un processeur de chiffrement dédié.

L'ensemble de ces moyens peut se présenter sous la forme d'un processeur particulier implémenté au sein du périphérique, ledit processeur étant un processeur sécurisé. Selon un mode de réalisation particulier, ce périphérique met en œuvre une application particulière qui est en charge de la réalisation du chiffrement et de la transmission de données, cette application étant par exemple fournie par le fabricant du processeur en question afin de permettre l'utilisation dudit processeur. Pour ce faire, le processeur comprend des moyens d'identification uniques. Ces moyens d'identification uniques permettent d'assurer l'authenticité du processeur.

Par ailleurs, le périphérique comprend en outre un identifiant, ledit identifiant étant utilisé par le composant de confiance lors de la création du canal de communication sécurisé afin d'autoriser ou non le périphérique à se connecter au dispositif d'encaissement.

On décrit, en relation avec la figure 5, un composant de confiance mis en œuvre pour recevoir des données chiffrées en provenance d'un dispositif émetteur, selon le procédé décrit préalablement.

Par exemple, le composant de confiance comprend une mémoire 51 comprenant d'une mémoire tampon, une unité de traitement 52, équipée par exemple d'un microprocesseur, et pilotée par le programme d'ordinateur 53, mettant en œuvre un procédé de réception de données chiffrées,

À l'initialisation, les instructions de code du programme d'ordinateur 53 sont par exemple chargées dans une mémoire avant d'être exécutées par le processeur de l'unité de traitement 52. L'unité de traitement 52 reçoit en entrée des requêtes d'établissement de canaux sécurisés (en provenance d'un périphérique et/ou d'un dispositif d'encaissement) et par la suite reçoit en entrée des données chiffrées en provenance de ces équipements. Le microprocesseur de l'unité de traitement 52 met en œuvre les étapes du procédé de transmission de données, selon les instructions du programme d'ordinateur 53 pour contrôler la validité des requêtes d'établissement de canaux sécurisés (en fonction d'identifiants fournis dans ces requêtes).

Pour cela, le dispositif comprend, outre la mémoire tampon 51, des moyens de communication, des moyens de transmission de données et éventuellement un processeur de chiffrement indépendant.

L'ensemble de ces moyens peut se présenter sous la forme d'un processeur particulier constituant le composant de confiance, ledit processeur étant un processeur sécurisé et/ou faisant appel à une mémoire sécurisée (Msec). Selon un mode de réalisation particulier, ce composant de confiance met en œuvre une application particulière qui est en charge de la réalisation de la réception et du contrôle des données reçues, cette application étant par exemple fournie par le fabricant du processeur en question afin de permettre l'utilisation dudit processeur. Pour ce faire, le processeur comprend des moyens d'identification uniques. Ces moyens d'identification uniques permettent d'assurer l'authenticité du processeur.

Par ailleurs, le composant de confiance comprend en outre des moyens d'obtention de clé de chiffrement, par exemple des clés de chiffrement dites de « session » qui sont dérivées par exemple de clés maitres, enregistrées au sein du composant lui-même.

En fonction des modes de réalisation, le composant de confiance comprend également des moyens de gestion d'une liste de dispositifs autorisés à établir des canaux de transmission sécurisés, dite liste blanche. Plus particulièrement, le composant de confiance peut comprendre une première mémoire physique, d'une taille prédéterminée, dans laquelle une liste est insérée. Le composant de confiance peut également comprendre une deuxième mémoire physique, d'une taille prédéterminée, dans laquelle des blocs de données chiffrées (ou déchiffrées) sont insérés postérieurement au traitement de réception de ces données. Ces données peuvent également être insérées et gérées dans la mémoire sécurisée (Msec) du composant de confiance lorsque celui-ci en est muni. Cela permet de rendre encore plus complexe la tâche d'interception des données et celle de compréhension du fonctionnement du composant de confiance.

Un serveur de transmission distant peut également transmettre la liste blanche (via un proxy/composant exécuté dans le Rich OS) dans la mémoire sécurisée du composant de confiance. Cette communication peut alors être protégée par un canal sécurisé de nature différente des canaux sécurisés utilisées pour l'appairage.

On décrit, en relation avec la figure 6, un dispositif d'encaissement configuré pour recevoir des données chiffrées en provenance d'un composant de confiance, selon le procédé décrit préalablement.

Par exemple, le dispositif d'encaissement comprend une mémoire 61 comprenant d'une mémoire tampon, une unité de traitement 62, équipée par exemple d'un microprocesseur, et pilotée par le programme d'ordinateur 63, mettant en œuvre un procédé de réception de données chiffrées,

À l'initialisation, les instructions de code du programme d'ordinateur 63 sont par exemple chargées dans une mémoire avant d'être exécutées par le processeur de l'unité de traitement 62. L'unité de traitement 62 reçoit en entrée notamment des données chiffrées en provenance d'un composant de confiance, données reçus postérieurement à l'initialisation du dispositif d'encaissement et à la transmission, par ce dispositif d'une requête d'établissement d'un canal de communication sécurisé avec le composant de confiance. Le microprocesseur de l'unité de traitement 62 met en œuvre les étapes du procédé de transmission de données, selon les instructions du programme d'ordinateur 63 pour recevoir les données en provenance du composant de confiance et pour router les données en provenance du périphérique vers le composant de confiance.

Pour cela, le dispositif comprend, outre la mémoire tampon 61, des moyens de communication (tels que des moyens de communication réseau), des moyens de transmission de données et éventuellement un processeur de chiffrement indépendant.

L'ensemble de ces moyens peut se présenter sous la forme d'un processeur particulier implémenté au sein du dispositif d'encaissement, ledit processeur étant un processeur sécurisé et/ou faisant appel à une mémoire sécurisée (Msec). Selon un mode de réalisation particulier, ce dispositif d'encaissement met en œuvre une application particulière qui est en charge notamment de la réception et du contrôle des données reçues, cette application étant par exemple fournie par le fabricant du processeur en question afin de permettre l'utilisation dudit processeur. Pour ce faire, le processeur comprend des moyens d'identification uniques. Ces moyens d'identification uniques permettent d'assurer l'authenticité du processeur.

Par ailleurs, le dispositif d'encaissement comprend en outre des moyens d'obtention de clé de chiffrement, par exemple des clés de chiffrement dites de « session » qui sont dérivées par exemple de clés maitres, enregistrées au sein du dispositif d'encaissement lui-même.

En fonction des modes de réalisation, le dispositif d'encaissement comprend également des moyens de gestion de gestion de données sécurisées. Plus particulièrement, le dispositif d'encaissement peut comprendre une première mémoire physique, d'une taille prédéterminée, dans laquelle les données en provenance des périphériques sont enregistrées avant d'être routées. Le dispositif d'encaissement peut également comprendre une deuxième mémoire physique, d'une taille prédéterminée, dans laquelle des blocs de données chiffrées (ou déchiffrées) sont insérés postérieurement au traitement de réception de ces données en provenance du composant de confiance. Ces données peuvent également être insérées et gérées dans la mémoire sécurisée (Msec) du dispositif d'encaissement lorsque celui-ci en est muni. Cela permet de rendre encore plus complexe la tâche d'interception des données et celle de compréhension du fonctionnement du dispositif d'encaissement.

## Revendications

1. Procédé de transmission de données, procédé mis en œuvre au sein d'un environnement d'exécution sécurisé d'un dispositif électronique, dit composant de confiance (TC), ledit composant de confiance étant couplé à une caisse enregistreuse (CRA, DEC), ledit procédé de transmission de données comprenant les étapes suivantes:
- une étape de réception (301), en provenance de la caisse enregistreuse (DEC, CRA), d'une première requête (RSC#1) d'établissement d'un premier canal de communication sécurisé (SC#1) avec ledit composant de confiance (TC) ;
- une étape d'établissement (302) dudit premier canal de communication sécurisé (SC#1) entre le composant de confiance (TC) et la caisse enregistreuse (CRA), à l'aide d'au moins un identifiant de ladite caisse enregistreuse contenu dans ladite première requête (RSC#1), après une première étape de recherche positive, au sein d'une structure de données d'autorisation préalablement provisionnée dans le composant de confiance, d'une donnée correspondant audit identifiant de ladite caisse enregistreuse ;
- une étape de réception (304), en provenance d'un terminal de paiement (PERIPH, TERMP), d'une deuxième requête (RSC#2) d'établissement d'un deuxième canal de communication sécurisé (SC#2) avec ledit composant de confiance (TC) ;
- une étape d'établissement (305) dudit deuxième canal de communication sécurisé (SC#2), entre le composant de confiance (TC) et le terminal de paiement (PERIPH, TERMP) à l'aide d'au moins un identifiant du terminal de paiement, contenu dans ladite deuxième requête, après une seconde étape de recherche positive, au sein de la structure de données d'autorisation, d'une donnée correspondant audit identifiant du terminal de paiement;
- une étape de transmission, par le terminal de paiement d'une donnée à destination de ladite caisse enregistreuse comprenant le déchiffrement par le composant de confiance de la donnée provenant du second canal sécurisé, le rechiffrement et l'envoi sur le premier canal sécurisé de la donnée.

2. Procédé de transmission de données selon la revendication 1, **caractérisé en ce que** ladite étape d'établissement dudit premier canal de communication sécurisé comprend, lorsque ladite première recherche délivre un résultat positif :
- une étape d'appairage de ladite caisse enregistreuse avec ledit composant de confiance, mettant en œuvre un protocole d'appairage prédéterminé.

3. Procédé de transmission de données selon la revendication 1, **caractérisé en ce que** ladite étape d'établissement dudit deuxième canal de communication sécurisé comprend, lorsque ladite seconde recherche délivre un résultat positif :
- une étape d'appairage dudit terminal de paiement avec ledit composant de confiance, mettant en œuvre un protocole d'appairage prédéterminé.

4. Procédé de transmission de données selon la revendication 1, **caractérisé en ce que**, postérieurement à l'étape d'établissement dudit deuxième canal de communication sécurisé, ledit procédé comprend :
- une étape de réception, en provenance dudit terminal de paiement, d'un message de confirmation d'appairage, ledit message comprenant au moins une première donnée chiffrée ;
- une étape de déchiffrement dudit message d'appairage, délivrant au moins une donnée de confirmation d'appairage ;
- une étape de chiffrement de ladite au moins une donnée d'appairage, délivrant au moins une deuxième donnée chiffrée ;
- une étape de transmission de ladite au moins une deuxième donnée chiffrée à destination de ladite caisse enregistreuse.

5. Procédé selon la revendication 4, **caractérisé en ce que** ladite étape de réception, en provenance dudit terminal de paiement, d'un message de confirmation d'appairage comprend une étape de réception de ladite au moins une première donnée chiffrée en provenance de ladite caisse enregistreuse, lequel joue le rôle de relai entre ledit terminal de paiement et ledit composant de confiance.

6. Dispositif électronique de transmission de données, disposant d'un environnement d'exécution sécurisé, dit composant de confiance, ledit composant de confiance (TC) étant couplé à une caisse enregistreuse (CRA, DEC), ledit composant de confiance comprenant des moyens de transmission de données à destination de ladite caisse enregistreuse et d'au moins un terminal de paiement (PERIPH, TERMP), le composant de confiance étant **caractérisé en ce qu'**il comprend :
- des moyens de réception, en provenance de ladite caisse enregistreuse, d'une première requête d'établissement d'un premier canal de communication sécurisé (SC#1) avec ledit composant de confiance ;
- des moyens d'établissement, entre le composant de confiance (TC) et la caisse enregistreuse (CRA), dudit premier canal de communication sécurisé à l'aide d'au moins un identifiant de ladite caisse enregistreuse contenue dans ladite première requête, après la mise en œuvre de moyens de recherche, au sein d'une structure de données d'autorisation préalablement provisionnée dans le composant de confiance, d'une donnée correspondant audit identifiant de ladite caisse enregistreuse, la mise en oeuvre délivrant un résultat positif ;
- des moyens de réception, en provenance dudit terminal de paiement, d'une deuxième requête d'établissement d'un deuxième canal de communication sécurisé avec ledit composant de confiance ;
- des moyens d'établissement dudit deuxième canal de communication sécurisé, entre le composant de confiance (TC) et le terminal de paiement à l'aide d'au moins un identifiant du terminal de paiement, contenu dans ladite deuxième requête, moyens intervenant après la mise en œuvre de moyens de recherche, au sein de la structure de données d'autorisation, d'une donnée correspondant audit identifiant du terminal de paiement, la mise en œuvre délivrant un résultat positif,
- des moyens de transmission de données comprenant des moyens de réception et de déchiffrement de données du deuxième canal de communication sécurisé et de chiffrement et d'envoi de données sur le premier canal sécurisé.

7. Système de paiement du type comprenant une caisse enregistreuse et un terminal de paiement, ledit terminal de paiement étant configuré pour effectuer des opérations de paiement pour le compte de ladite caisse enregistreuse, système **caractérisé en ce qu'**il comprend un dispositif électronique de transmission de données, dit composant de confiance selon la revendication 6.

8. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de transmission de données selon la revendication 1 à 5, lorsqu'il est exécuté par un processeur.

## Patentansprüche

1. Datenübertragungsverfahren, Verfahren das in einer gesicherten Ausführungsumgebung einer elektronischen Vorrichtung umgesetzt wird, die Vertrauenskomponente (TC) genannt wird, wobei die Vertrauenskomponente mit einer Registrierkasse (CRA, DEC) verbunden ist, wobei das Datenübertragungsverfahren die folgenden Schritte aufweist:
- einen Schritt des Empfangens (301) einer ersten Anfrage (RSC#1) zum Erstellen eines ersten gesicherten Kommunikationskanals (SC#1) mit der Vertrauenskomponente (TC) von der Registrierkasse (CRA, DEC),
- einen Schritt des Erstellens (302) des ersten gesicherten Kommunikationskanals (SC#1) zwischen der Vertrauenskomponente (TC) und der Registrierkasse (CRA) mit Hilfe von mindestens einer Kennung der Registrierkasse, die in der ersten Anfrage (RSC#1) enthalten ist, nach einem ersten positiven Schritt des Suchens einer Dateneinheit, die der Kennung der Registrierkasse entspricht, in einer Berechtigungsdatenstruktur, die zuvor in der Vertrauenskomponente bereitgestellt worden ist,
- einen Schritt des Empfangens (304) einer zweiten Anfrage (RSC#2) zum Erstellen eines zweiten gesicherten Kommunikationskanals (SC#2) mit der Vertrauenskomponente (TC) von einem Zahlungsendgerät (PERIPH, TERMP),
- einen Schritt des Erstellens (305) des zweiten gesicherten Kommunikationskanals (SC#2) zwischen der Vertrauenskomponente (TC) und dem Zahlungsendgerät (PERIPH, TERMP) mit Hilfe von mindestens einer Kennung des Zahlungsendgeräts, die in der zweiten Anfrage enthalten ist, nach einem zweiten positiven Schritt des Suchens einer Dateneinheit, die der Kennung des Zahlungsendgeräts entspricht, in der Berechtigungsdatenstruktur,
- einen Schritt des Übertragens einer Dateneinheit an die Registrierkasse durch das Zahlungsendgerät, der das Entschlüsseln der Dateneinheit, die von dem zweiten gesicherten Kanal stammt, das Neuverschlüsseln und das Senden der Dateneinheit auf den ersten gesicherten Kanal durch die Vertrauenskomponente aufweist.

2. Datenübertragungsverfahren nach Anspruch 1, **dadurch gekennzeichnet, dass** der Schritt des Erstellens des ersten gesicherten Kommunikationskanals, wenn das erste Suchen ein positives Ergebnis ergibt:
- einen Schritt des Pairings der Registrierkasse mit der Vertrauenskomponente aufweist, das ein vorbestimmtes Pairingprotokoll umsetzt.

3. Datenübertragungsverfahren nach Anspruch 1, **dadurch gekennzeichnet, dass** der Schritt des Erstellens des zweiten gesicherten Kommunikationskanals, wenn das zweite Suchen ein positives Ergebnis ergibt:
- einen Schritt des Pairings des Zahlungsendgeräts mit der Vertrauenskomponente aufweist, der ein vorbestimmtes Pairingprotokoll umsetzt.

4. Datenübertragungsverfahren nach Anspruch 1, **dadurch gekennzeichnet, dass** das Verfahren nach dem Schritt des Erstellens des zweiten gesicherten Kommunikationskanals aufweist:
- einen Schritt des Empfangens einer Bestätigungsnachricht des Pairings vom Zahlungsendgerät, wobei die Nachricht mindestens eine erste verschlüsselte Dateneinheit aufweist,
- einen Schritt des Entschlüsselns der Nachricht des Pairings, der mindestens eine Bestätigungsdateneinheit des Pairings bereitstellt,
- einen Schritt des Verschlüsselns der mindestens einen Dateneinheit des Pairings, der mindestens eine zweite verschlüsselte Dateneinheit bereitstellt,
- einen Schritt des Übermittelns der mindestens zweiten verschlüsselten Dateineinheit an die Registrierkasse.

5. Verfahren nach Anspruch 4, **dadurch gekennzeichnet, dass** der Schritt des Empfangens einer Bestätigungsnachricht des Pairings von dem Zahlungsendgerät einen Schritt des Empfangens der mindestens einen ersten verschlüsselten Dateneinheit von der Registrierkasse aufweist, die als Relais zwischen dem Zahlungsendgerät und der Vertrauenskomponente fungiert.

6. Elektronischen Vorrichtung zur Datenübertragung, die über eine gesicherte Ausführungsumgebung verfügt, die Vertrauenskomponente genannt wird, wobei die Vertrauenskomponente (TC) mit einer Registrierkasse (CRA, DEC) verbunden ist,
wobei die Vertrauenskomponente Mittel zum Übertragen von Daten an die Registrierkasse und an mindestens ein Zahlungsendgerät (PERIPH, TERMP) aufweist,
wobei die Vertrauenskomponente **dadurch gekennzeichnet ist, dass** sie aufweist:
- Mittel zum Empfangen einer ersten Anfrage zum Erstellen eines ersten gesicherten Kommunikationskanals (SC#1) mit der Vertrauenskomponente von der Registrierkasse,
- Mittel zum Erstellen des ersten gesicherten Kommunikationskanals zwischen der Vertrauenskomponente (TC) und der Registrierkasse (CRA) mit Hilfe von mindestens einer Kennung der Registrierkasse, die in der ersten Anfrage enthalten ist, nach dem Einsetzen von Mitteln zum Suchen in einer Berechtigungsdatenstruktur, die zuvor in der Vertrauenskomponente bereitgestellt worden ist, einer Dateneinheit, die der Kennung der Registrierkasse entspricht, wobei das Einsetzen ein positives Ergebnis ergibt,
- Mittel zum Empfangen einer zweiten Anfrage zum Erstellen eines zweiten gesicherten Kommunikationskanals mit der Vertrauenskomponente von dem Zahlungsendgerät,
- Mittel zum Erstellen des zweiten gesicherten Kommunikationskanals zwischen der Vertrauenskomponente (TC) und dem Zahlungsendgerät mit Hilfe von mindestens einer Kennung des Zahlungsendgeräts, die in der zweiten Anfrage enthalten ist, Mittel, die nach dem Einsetzen von Mitteln zum Suchen in der Berechtigungsdatenstruktur einer Dateneinheit, die der Kennung des Zahlungsendgeräts entspricht, tätig werden, wobei das Einsetzen ein positives Ergebnis ergibt,
- Mittel zum Übertragen von Daten, umfassend Mittel zum Empfangen und zum Entschlüsseln von Daten des zweiten gesicherten Kommunikationskanals und zum Verschlüsseln und zum Senden von Daten auf dem ersten gesicherten Kanal.

7. Zahlungssystem des Typs, umfassend eine Registrierkasse und ein Zahlungsendgerät, wobei das Zahlungsendgerät konfiguriert ist, um für die Registrierkasse Zahlungstransaktionen durchzuführen, System, das **dadurch gekennzeichnet, dass** es eine elektronischen Vorrichtung zur Datenübertragung, die Vertrauenskomponente genannt wird, nach Anspruch 6 aufweist.

8. Computerprogrammprodukt, das von einem Kommunikationsnetz herunterladbar ist und/oder auf einem computerlesbaren Aufzeichnungsmedium gespeichert ist und/oder von einem Mikroprozessor ausführbar ist, **dadurch gekennzeichnet, dass** es Programmcodeanweisungen für das Ausführen eines Datenübertragungsverfahrens nach Anspruch 1 bis 5 aufweist, wenn es von einem Prozessor ausgeführt wird.

## Claims

1. Method for transmitting data, implemented within a secured execution environment of an electronic device, called a trusted component (TC), said trusted component being coupled to a cash register (CRA, DEC), said method of data transmission comprising the following steps:
- a step for receiving (301), from the cash register (DEC, CRA), a first request (RSC#1) for setting up a first secured communications channel (SC#1) with said trusted component (TC);
- a step for setting up (302) said first secured communications channel (SC#1) between the trusted component (TC) and the cash register (CRA), by means of at least an identifier of said cash register (CRA) contained in said first request (RSC#1), after a first positive step of searching, within an authorization data structure previously provided in the trusted component, for a piece of data corresponding to said identifier of said cash register;
- a step for receiving (304), from a payment terminal (PERIPH, TERMP), a second request (RSC#2) for setting up a second secured communications channel (SC#2) with said trusted component (TC);
- a step for setting up (305) said second secured communications channel (SC#2), between said trusted component (TC) and said payment peripheral (PERIPH, TERMP) by means of at least an identifier of the payment terminal, contained in said second request, after a second positive step of searching, within the authorization data structure, for a piece of data corresponding to said identifier of said payment terminal;
- a step for transmitting, by the payment terminal, a piece of data intended for said cash register comprising decrypting by the trusted component said piece of data from the second secured communications channel, re-encrypting and sending the piece of data on the first secured communications channel.

2. Method for transmitting data according to claim 1, **characterized in that** said step for setting up said first secured communications channel comprises when said first search delivers a positive result:
- a step for pairing said cash register with said trusted component, implementing a predetermined pairing protocol.

3. Method for transmitting data according to claim 1, **characterized in that** said step for setting up said second secured communications channel comprises, when said second search delivers a positive result:
- a step for pairing said peripheral with said trusted component, implementing a predetermined pairing protocol.

4. Method for transmitting data according to claim 1 **characterized in that**, subsequently to the step for setting up said second secured communications channel, said method comprises:
- a step for receiving a message of confirmation of pairing coming from said payment terminal, said message comprising at least one first piece of encrypted data;
- a step for decrypting said pairing message delivering at least one piece of pairing confirmation data;
- a step for encrypting said at least one piece of pairing data, delivering at least one second piece of encrypted data;
- a step for transmitting said at least one second piece of encrypted data to said cash register.

5. Method according to claim 4, **characterized in that** said step for receiving a message of confirmation of pairing coming from said payment terminal comprises a step for receiving said at least one first piece of encrypted data coming from said cash register, which plays the role of a relay between said payment terminal and said trusted component.

6. Electronic device for the transmission of data, having available a secured execution environment, called a trusted component, said trusted component (TC) being coupled with a cash register (CRA, DEC), said trusted component comprising means for transmitting data intended for the cash register and for at least one payment terminal (PERIPH, TERMP), the trusted component being **characterized in that** it comprises:
- means for receiving a first request, from the cash register, for setting up a first secured communications channel (SC#1) with said trusted component;
- means for setting up, between the trusted component (TC) and the cash register (CRA), said first secured communications channel by means of an identifier of said cash register contained in said first request, after the implementation of means for searching, within the authorization data structure previously provided in the trusted component, for a piece of data corresponding to said identifier of said payment terminal, the implementation delivering a positive result;
- means for receiving a second request, from said payment terminal, for setting up a second secured communications channel with said trusted component;
- means for setting up said second secured communications channel, between the trusted component (TC) and the payment terminal, by means of at least an identifier of the payment terminal, contained in of said second request, said means operating after the implementation of means for searching, within the authorization data structure previously provided in the trusted component, for a piece of data corresponding to said identifier of said payment terminal, the implementation delivering a positive result,
- means for transmitting data comprising means for receiving and decrypting data from the second secured communications channel, and encrypting and sending data on the first secured communications channel.

7. System of payment of the type comprising a cash register and a payment terminal, said payment terminal being configured to carry out payment operations in favor of said cash register, system **characterized in that** it comprises an electronic data transmission device called a trusted component according to claim 6.

8. Computer program product downloadable from a communications network and/or stored on a computer-readable medium and/or executable by a microprocessor, **characterized in that** it comprises program code instructions for executing a method for transmitting data according to claim 1 to 5, when it is executed by a computer.
